# EUROPEAN PATENT APPLICATION

(11) **EP 4 799 510 A1**
(43) Date of publication of application: **02.09.2026**
(21) Application number: 24824548.2
(22) Date of filing: 23.10.2024
(51) Int. Cl.: A42B 3/30, H04B 1/3827

(54) **WIRELESS COMMUNICATION DEVICE INTEGRATABLE WITHIN A HELMET**

(30) Priority: 24.10.2023 ES 202330874
(71) Applicant: Mat Product & Technology, SL, 08223 Terrassa (ES)
(72) Inventor: MATEU CODINA, Xavier, 08230 Matadepera (Barcelona) (ES)
(74) Representative: Torner, Juncosa I Associats, SL
(86) International application number: PCT/ES2024/070648
(87) International publication number: WO 2025/088235

(57) **Abstract**

A wireless communication device integratable within a helmet, comprising a microphone (31), a first shell (10) and a second shell (20), flattened and hollow, formed by a front wall (1) and a rear wall (2) separated in a transverse direction (Z) and connected on their outer perimeter by a perimetric wall (3); the first shell (10) housing, superimposed therein, a first speaker (11) and at least part of an electric battery (12); and the second shell (20) housing, superimposed therein, the second speaker (21), and at least part of the control electronics (22) including a bidirectional wireless communication antenna; wherein the perimetric wall (3) includes at least one annular, crushable region (4) in the transverse direction (Z) that is interposed between the front wall (1) and the rear wall (2), said crushable region (4) having a small average thickness.

## Description

### Field of the Art

The present invention concerns a wireless communication device integratable within a helmet, namely a device that is intended to be integrated in the inner space of a helmet, for example a motorcycle helmet, placing at least one speaker next to an ear of the user of the helmet and a microphone in a position close to their mouth.

The speaker and the microphone will be connected to a wireless bidirectional antenna allowing for the connection of the communication device with another remote device, for example another identical or equivalent wireless communication device, by means of radiofrequency waves, which allows to receive and to transmit audible messages between the communication device and the remote device.

### State of the Art

Wireless communication devices integratable within a helmet are known. For example, devices provided with a first shell with a first speaker, a second shell with a second speaker, a third shell with a microphone and also a fourth shell including the battery and the control electronics, the first, second and third shells being located within the helmet, and the fourth shell being attached on the outside of the helmet, where it has no space limitations to house the battery and the control electronics, all shells being connected with each other by means of cables. This construction allows for the manufacturing of first, second and third shells with a small size that are easily crushable in case of an accident, as they only contain the speakers and the microphone, which increases the safety of the user of the helmet.

However, the presence of a fourth shell attached on the outside of the helmet makes it more likely that said fourth shell may sustain damage in its daily use and, since said fourth shell is a projection protruding from the helmet, it also causes an increase in the likelihood of inducing an undesirable rotation of the helmet in case of an accident, which diminishes the safety of the user.

Wireless communication devices are also known for other applications lacking the fourth shell, the battery and the control electronics being embedded in the first and second shells. However, these devices are bulky and are not suitable for their embedding within a helmet that, especially in the case of motorcycle helmets, has high safety requirements. In addition, no devices of this type are known to be crushable in case of an accident.

This invention solves the above and other problems of the existing state of the art.

### Brief Description of the Invention

This invention concerns a wireless communication device integratable within a helmet, as described in claim 1.

The proposed wireless communication device comprises, in a mode known *per se* in the state of the art:
a first speaker, a second speaker, a microphone and an electric battery connected to control electronics including a bidirectional wireless communication antenna;
a first shell and a second shell, each one being a flattened and hollow shell, formed by a front wall, permeable to sound at least in a centre region, and a rear wall, being the front wall and the rear wall separated in a transverse direction and connected on their outer perimeter through a perimetric wall;
the first shell housing the first speaker, facing the front side thereof, and housing at least part of the electric battery therein; and
the second shell housing the second speaker, facing the front side thereof, and housing at least part of the control electronics therein.

Thus, the control electronics, powered by the wireless battery, allows transmitting and receiving radiofrequency signals through a communication antenna embedded in said control electronics. The received signals may be converted into sounds through the first and second speakers connected to the control electronics, and the signals captured by the microphone may also be transmitted through said wireless communication antenna. The different components included in the communication device will be connected with each other by means of cables.

This allows to establish a communication, without the need for cables, between the proposed control device and one or several remote devices, for example a mobile phone with an Internet connection, another wireless communication device identical or equivalent to the one proposed, a vehicle onboard computer, a GPS device, etc.

The first speaker, and at least part of the electric battery, will be embedded within a first shell, flattened and hollow, intended for being housed within a helmet in a position opposite an ear of the user of the helmet.

Likewise, the second speaker and at least part of the control electronics will be embedded within a second shell, flattened and hollow, intended for also being housed within the same helmet in a position diametrically opposed to that of the first shell, opposite the other ear of the user of the helmet.

This arrangement allows distributing the main and bulkier components that constitute the communication device between the first and second shells.

As per the above, the battery may be fully housed within the first shell, or only partly housed within the first shell, the rest of the battery being housed in other parts of the device, for example, within the second shell.

Likewise, the control electronics may be fully housed within the second shell, or only partly housed within the second shell, the rest of the control electronics being housed in other parts of the device, such as, for example, within the first shell.

This way, the entire device will be fully contained within the helmet, without parts thereof housed outside of the helmet, which increases the safety in case of an accident and diminishes the risk of damaging the device during the normal use.

Both the first shell and the second shell are flattened shells, namely they are provided with two opposite main sides, one being the front side and the other being the rear side. Said main sides are separated in a transverse direction, which may, for example, be a direction perpendicular to the front and/or rear walls when said walls are flat walls.

The front side is defined on a front wall of the shell which is permeable to sound at least in its centre region, covering the first speaker or the second speaker contained within the first or second shell and the former interiorly facing said sound-permeable centre region of the front wall, such that the sounds transmitted by the first or second speaker are projected outwardly of the corresponding shell through said sound-permeable centre region of the front wall.

Said centre region permeable to sound may consist of an opening of the front wall covered by a fabric impregnated with a waterproofing treatment to prevent the entrance of water within the first or second shell therethrough.

The rear side is defined on a rear wall opposite the front wall, typically parallel thereto. This rear wall is the one that will be attached to the intrados of the helmet when the first or second shell is attached within the helmet.

The front wall and the rear wall of the shell have their respective perimetric edges connected by means of a perimetric wall extending from the perimeter of the front wall to the perimeter of the rear wall. Typically, said perimetric wall has at least one part extending in the transverse direction.

To achieve a compact construction of the device, it is proposed that said at least part of the electric battery embedded in the first shell be arranged between the first speaker and the rear side of the first shell, and that said at least part of the control electronics embedded in the second shell be arranged between the second speaker and the rear side of the second shell.

Despite having a compact construction, it is also necessary that the first and second shells have a good performance in case of an accident, allowing for some crushing thereof in order to diminish the risk of causing injury to the user of the helmet.

To that end, the first and second shells have some capacity for being crushed, especially in the transverse direction.

To achieve this, it is proposed that, both in the first shell and in the second shell, the perimetric wall include at least one crushable region in the transverse direction, the average thickness of the perimetric wall in the crushable region being small relative to the average thickness of the rest of the perimetric wall, providing for its deformation and the crushing of the shell that contains it.

Said crushable region will be an annular region of the perimetric wall interposed between the front wall and the rear wall, such that the connection between the front and rear walls through the perimetric wall spans the annular region along the perimeter of the shell, thus ensuring the possibility that the entire shell will be crushed in the transverse direction.

Therefore, it is proposed that the perimetric wall connecting the front wall and the rear wall of a single shell, include a crushable region interposed between said front and rear walls, such that a compression pressure of the shell, applied on the front and rear walls in the transverse direction, will cause the crushing of the crushable region, making it possible to reduce the separation between the front and rear walls, reducing the height of the perimetric wall along its entire extension around the first or second shell, reducing the height of the shell in the transverse direction.

Among the inner components of the shells, the first and second speakers are provided with some space to be able to vibrate, said space being what allows for the crushing of the shell in case of an accident.

Preferably, the crushable region will be a region of the perimetric wall not parallel to the transverse direction, providing for its deformation under a force in the transverse direction.

For example, it is proposed that the crushable region may be a bevel, or a rounded chamfer of the perimetric wall, connected to the outer perimeter of the front wall and/or of the rear wall, providing a crushable transition region not perpendicular to the front wall and/or to the rear wall precisely in the connection area between the perimetric wall and the front wall and/or rear wall, further resulting in a shell with chamfered or rounded corners in said connection area between the perimetric wall and the front wall and/or the rear wall.

Optionally, it is also contemplated that the crushable region may be a corrugated portion of the perimetric wall, in the shape of a pleated section or with an accordion configuration, each fold edge of said corrugated portion being preferably parallel to the front wall. This corrugated portion provides for the reduction of the height of the wall in case of a compression caused by an accident, further improving the safety of the user.

It will be understood that references to geometric positions, such as, for example, parallel, perpendicular, tangential, etc. allow for deviations of up to ±5° relative to the theoretical position defined by said nomenclature.

### Brief Description of the Figures

The above and other advantages and characteristics will be more fully understood from the following detailed description of an exemplary embodiment with reference to the attached drawings, which must be taken in an illustrative, non-limiting manner, wherein:

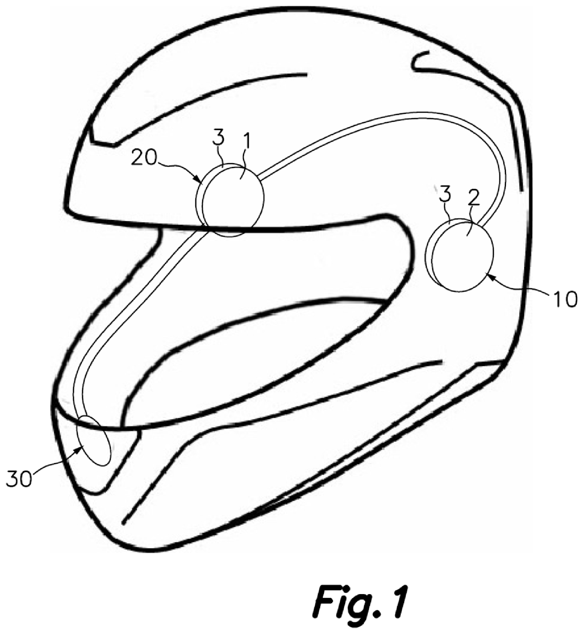

Fig. 1 shows a schematic perspective view of a helmet including the wireless communication device embedded therein, said device having been drawn as if the helmet were transparent in order to facilitate the understanding of the drawing.
Fig. 2 shows a cross-sectional perspective view of the first shell through a plane parallel to the transverse direction.
Fig. 3 shows a cross-sectional perspective view of the second shell through a plane parallel to the transverse direction.
Fig. 4 shows a cross-sectional perspective view of the third shell.

### Detailed Description of the Invention and Exemplary Embodiments

The attached figures show exemplary embodiments of the present invention with an illustrative, non-limiting character.

The proposed wireless communication device integratable within a helmet comprises a first speaker (11), a second speaker (21), a microphone (31) and an electric battery (12) connected to control electronics (22) including a bidirectional wireless communication antenna, to allow for a bidirectional communication of the communication device with a remote device wirelessly connected thereto.

The device further comprises a first shell (10) and a second shell (20), both flattened and hollow, intended to be attached to the intrados of the helmet, for example by means of Velcro, adhesive, magnets or other non-permanent attachment means, on opposite sides thereof, each shell facing an ear of the user of the helmet. Both shells will be connected with each other by means of a cable.

Each shell will be formed by a front wall (1) permeable to sound at least in its centre region and a rear wall (2) separated in a transverse direction (Z). Both front (1) and rear (2) walls will be connected on their outer perimeter through a perimetric wall (3). Said front and rear walls define two opposite front and rear main sides of the corresponding first or second shell (10, 20), the front side being the one facing the ear of the user and the rear side being the one adhered to and facing the intrados of the helmet.

The first shell (10) houses therein the first speaker (11), which will be facing the front side, to project the sound through said front side towards the exterior of the first shell (10) and towards the ear facing it. The first shell (10) also houses therein at least part of the electric battery (12), preferably the entirety of the electric battery (12). The electric battery (12) and the first speaker (11) are superimposed, one on top of the other, the electric battery (12) being arranged between then first speaker (11) and the rear side of the first shell (10), forming a compact assembly whose height is sufficiently small so as to be housed within the first shell (10).

The second shell (20) houses the second speaker (21) therein, also facing the front side of the shell wherein it is housed to project the sound outwardly. The second shell (20) also houses at least part of the control electronics (22), and preferably its entirety, superimposed to the second speaker (21), arranged between the second speaker (21) and the rear side of the second shell (20), also forming a compact assembly.

Both in the first shell (10) and in the second shell (20), the perimetric wall (3) includes at least one crushable region (4) in the transverse direction (Z) where the average thickness of the perimetric wall (3) is less than the average thickness of the rest of the perimetric wall (3); said crushable region (4) is an annular region interposed between the front wall (1) and the rear wall (2), which, in case of receiving a compression in the transverse direction (Z), allows for the crushing of the entire first shell (10) or the second shell (20) in the transverse direction (Z) to occur, reducing its height. This height reduction diminishes the risk of producing injuries to the user of the helmet in case of a traffic accident.

According to an embodiment of the invention, the crushable region (4) may be a region of the perimetric wall (3) inclined relative to the transverse direction (Z).

The regions of the perimetric wall (3) parallel to the transverse direction (Z) will be those most resistant to the crushing in the transverse direction (Z), especially in areas where the perimetric wall (3) has a corner or areas where the perimetric wall (3) has a curvature on a plane perpendicular to the transverse direction (Z), increasing its inertia against buckling when it is subjected to a pressure in the transverse direction (Z). Therefore, it is proposed that a crushable region (4) be included in a region of the transverse wall (3) that is not parallel to the transverse direction (Z).

For example, the crushable region (4) could be a bevel, or a rounded chamfer of the first or second shell (10, 20), where the perimetric wall (3) joins the outer perimeter of the front wall (1) and/or of the rear wall (2). In said bevel or rounded chamfer, the perimetric wall (3) will be inclined relative to the transverse direction (Z).

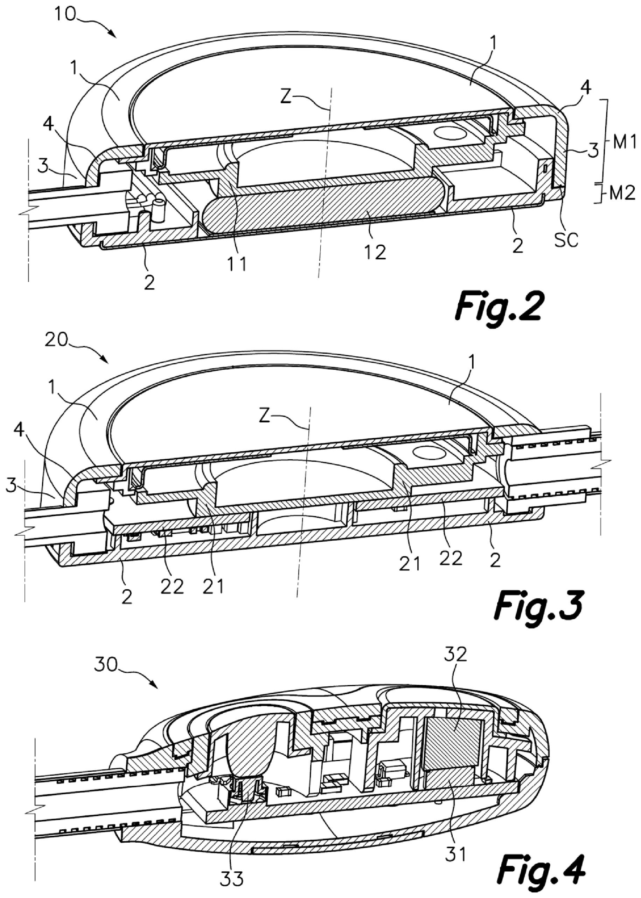

In the example shown in Figs. 2 and 3, the crushable region (4) is a rounded chamfer arranged where the perimetric wall (3) connects with the front wall (1). In the example shown, said rounded chamfer has an outer radius and an inner radius with a different centre, the inner radius being much smaller than the outer radius, resulting in a thinning of the thickness of the wall matching the crushable region (4), which weakens its strength and facilitates the collapse of the rounded chamfer when the shell is subjected to a force in the transverse direction perpendicular to the front and rear walls.

Alternatively or additionally, it is contemplated that the crushable region (4) may be a corrugated portion of the perimetric wall (3), namely a portion provided with multiple successive folds or undulations, in planes perpendicular to the transverse direction (Z), the perimetric wall (3) forming an accordion or bellows-type pleat, which facilitates its collapse in the transverse direction (Z) when subjected to a pressure in the transverse direction (Z).

It is also proposed that at least the perimetric wall (3) of the shell (10, 20) be made of plastic, ABS (Acrylonitrile Butadiene Styrene) plastic or TPU (Thermoplastic Polyurethane) plastic.

In this case, it is preferable that the crushable region (4) have a minimum thickness equal to or less than 0.7 mm.

The part of the front wall (1) other than the part permeable to sound and at least part of the rear wall (2) may also be made of plastic, ABS plastic or TPU plastic.

In order to maximally optimise the thickness of the shell, at least one centre part of the rear wall (2) may be made of a metal sheet with a thickness equal to or less than 0.3 mm or equal to or less than 0.2 mm. This is especially relevant in the first shell (10), which houses the electric battery (12) therein. The electric battery may be attached on said metal sheet by means of an interposed compressible adhesive.

It is proposed that said at least one sound-permeable centre region of the front wall (1) may be an opening of the front wall (1) covered by a fabric with a hydrophobic treatment, which prevents the entrance of water within the shell and also allows to reduce the total thickness of the shell.

Both the first shell (10) and the second shell (20) may each be made, from a first half (M1) including the front wall (1) and a second half (M2) including the rear wall (2). The perimetric wall (3) may be fully embedded in the first half (M1), such as in the embodiment shown in the figures, in the second half (M2), or distributed between the first and second halves (M1, M2).

The first and second halves (M1, M2) will be in contact through a contact surface (SC). Both halves will be joined by means of non-contiguous and spaced out welding points, ultrasonic welding points, welding lines or ultrasonic welding lines. The combined length of all the welding or ultrasonic points and/or lines will be less than the perimetric length of the contact surface (SC), such that only half of said contact surface (SC) will join both halves, favouring their breakage along the contact surfaces (SC) in case of an accident.

In the example shown in the figures, the junction is carried out by means of four ultrasonic horizontally opposed welding lines.

Preferably, the contact surfaces (SC) are not perpendicular to the transverse direction (Z), such that a compression of the shell in the transverse direction (Z) favours both a lateral sliding between the two halves and the breakage of the welding.

Both the first shell (10) and the second shell (20) will preferably have a thickness equal to or less than 8 mm and will be preferably inscribed in a diameter equal to or less than 45 mm or equal to or less than 40 mm.

These dimensions, along with the capacity to collapse in case of impact, allow the proposed device, including all the device components within the helmet, to meet the requirements proposed in the United Nations World Forum for Harmonization of Vehicle Regulations, UNECE regulation 22, amendment 06, identified with the reference ECE/TRANS/WP.29/2022/63, which defines the criteria which must govern the motorcycle helmets and their accessories.

Preferably, the battery (12) is fully contained within the first shell (10), fully contained in the projection of the first speaker (11) in the transverse direction (Z). That is, the electric battery (12) will be fully underneath the shadow of the first speaker (11) as projected in the transverse direction (Z).

Likewise, it is proposed that the control electronics (22) be fully contained within the second shell (20), fully contained in the projection of the second speaker (21) in the transverse direction (Z), that is underneath the shadow of the second speaker (21) as projected in the transverse direction (Z).

Preferably, the control electronics (22) will consist of a printed circuit board provided with surface-mounting components on both sides thereof, thus increasing its density and reducing its size sufficiently so as to be contained underneath the second speaker (21).

The microphone (31) may be embedded in a third shell (30) connected to the control electronics (22) by means of a cable, said third shell (30) being intended to be attached on the intrados of the helmet, near the mouth of the user. For example, it is proposed that the microphone be a surface-mounting component attached on a printed circuit board contained within the third shell (30).

The third shell (30) may include a cavity opposite the microphone (31), said cavity containing an open-cell foam block (32) press-fitted therein as a wind filter.

The third shell (30) may also include, other than the microphone (31), a charging port for the battery and/or a control button (33) of the communication device and/or a light indicative of the operating state and/or of the charge state of the battery. These additional components may also be mounted on the same printed circuit board containing the microphone (31).

## Claims

1. A wireless communication device integratable within a helmet, comprising:
a first speaker (11), a second speaker (21), a microphone (31) and an electric battery (12) connected to control electronics (22) including a bidirectional wireless communication antenna;
a first shell (10) and a second shell (20), each one being a flattened and hollow shell formed by a front wall (1), permeable to sound at least in its centre region, and a rear wall (2) separated in a transverse direction (Z) and connected on their outer perimeter through a perimetric wall (3), the front and rear walls defining two main opposite front and rear sides;
the first shell (10) housing the first speaker (11), directed towards the front side, and at least part of the electric battery (12) therein; and
the second shell (20) housing the second speaker (21), directed towards the front side, and at least part of the control electronics (22) therein,
**characterised in that**
said at least part of the electric battery (12) housed in the first shell (10) is arranged between the first speaker (11) and the rear side of the first shell (10);
said at least part of the control electronics (22) housed in the second shell (20) is arranged between the second speaker (21) and the rear side of the second shell (20); and **in that**
both in the first shell (10) and in the second shell (20), the perimetric wall (3) includes at least one crushable region (4) crushable in the transverse direction (Z), the average thickness of the perimetric wall (3) in the crushable region (4) being less than the average thickness of the rest of the perimetric wall (3), said crushable region (4) being an annular region of the perimetric wall (3) interposed between the front wall (1) and the rear wall (2).

2. The wireless communication device according to claim 1 wherein the crushable region (4) is a region of the perimetric wall (3) inclined relative to the transverse direction (Z).

3. The wireless communication device according to claim 1 or 2 wherein the crushable region (4) is a bevel, or a rounded chamfer, of the first or second shell (10, 20), where the perimetric wall (3) is connected to the outer perimeter of the front wall (1) and/or to the outer perimeter of the rear wall (2), and/or a corrugated portion of the perimetric wall (3).

4. The wireless communication device according to claim 1, 2 or 3 wherein at least the perimetric wall (3) of the first and/or second shell (10, 20) is made of plastic, ABS plastic or TPU plastic, and where the crushable region (4) has a minimum thickness equal to or less than 0.7 mm.

5. The wireless communication device according to claim 4 wherein at least the part of the front wall (1) other than the part permeable to sound and at least part of the rear wall (2) are also made of plastic, ABS plastic or TPU plastic.

6. The wireless communication device according to any one of the previous claims wherein at least in the first shell (10), at least a centre part of the rear wall (2) is made of a metal sheet having a thickness equal to or less than 0.3 mm or equal to or less than 0.2 mm.

7. The wireless communication device according to any one of the previous claims wherein both the first shell (10) and the second shell (20) are each made from a first half (M1) including the front wall (1) and a second half (M2) including the rear wall (2), contact surfaces (SC) between the first and second halves (M1, M2) being joined, in less than half of their perimetric length, by means of non-contiguous, spaced out welding points, ultrasonic welding points, welding lines and/or ultrasonic welding lines, favouring their breakage along the contact surfaces (SC) in case of an accident.

8. The wireless communication device according to claim 7 wherein the contact surfaces (SC) are not perpendicular to the transverse direction (Z).

9. The wireless communication device according to any one of the previous claims wherein both the first shell (10) and the second shell (20) have a thickness equal to or less than 8 mm and are inscribed in a diameter equal to or less than 45 mm or equal to or less than 40 mm.

10. The wireless communication device according to any one of the previous claims wherein the battery (12) is fully contained within the first shell (10), fully contained in the projection of the first speaker (11) in the transverse direction (Z).

11. The wireless communication device according to any one of the previous claims wherein the control electronics (22) is fully contained within the second shell (20), fully contained in the projection of the second speaker (21) in the transverse direction (Z).

12. The wireless communication device according to any one of the previous claims wherein said at least one sound-permeable centre region of the front wall (1) is an opening of the front wall (1) covered by a fabric with a hydrophobic treatment.

13. The wireless communication device according to any one of the previous claims wherein the microphone (31) is embedded in a third shell (30) connected to the control electronics (22) by means of a cable.

14. The wireless communication device according to claim 13 wherein the third shell (30) includes a cavity opposite the microphone (31), said cavity containing an open-cell foam block (32) press-fitted therein as a wind filter.

15. The wireless communication device according to any one of the previous claims wherein the third shell (30) also includes a charging port of the battery and/or a control button (33) of the communication device and/or a light indicative of the operating state and/or of the battery charge state.
